(19) Europäisches Patentamt
European Patent Office
Office européen des brevets

(11) **EP 1 336 867 B1**

(12) **FASCICULE DE BREVET EUROPEEN**

(45) Date de publication et mention
de la délivrance du brevet:
**23.02.2011 Bulletin 2011/08**

(51) Int Cl.:
***G01S 13/42*** *(2006.01)* ***G01S 13/72*** *(2006.01)*

(21) Numéro de dépôt: **02102575.4**

(22) Date de dépôt: **14.11.2002**

(54) **Procédé de régulation de la charge d'un radar, notamment par adaptation du maillage de veille**

Verfahren zur Regelung der Last eines Radars, insbesondere mittels Anpassung der Überwachungsdichte

Method for regulating the workload of a radar, particularly by means of adaptation of the surveillance pattern

(84) Etats contractants désignés:
**DE FR GB IT**

(30) Priorité: **26.11.2001 FR 0115522**

(43) Date de publication de la demande:
**20.08.2003 Bulletin 2003/34**

(73) Titulaire: **Thales**
**75008 Paris (FR)**

(72) Inventeurs:
• **BARBARESCO, Frédéric**
**c/o Thales Intellectual Prop.**
**94117 CX, ARCUEIL (FR)**
• **MONNIER, Bernard**
**c/o Thales Intellectual Property**
**94117 CX, ARCUEIL (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 723 211 FR-A- 2 737 578**
**US-A- 4 649 390 US-A- 5 748 468**

• **PATENT ABSTRACTS OF JAPAN vol. 2000, no. 04, 31 août 2000 (2000-08-31) & JP 2000 003286 A (NEC MOBILE COMMUN LTD), 7 janvier 2000 (2000-01-07)**
• **PATENT ABSTRACTS OF JAPAN vol. 1995, no. 10, 30 novembre 1995 (1995-11-30) & JP 07 177197 A (NEC CORP), 14 juillet 1995 (1995-07-14)**
• **PHAM K K: "Location accuracy in X-band multifunction radar" PROCEEDINGS OF THE NATIONAL RADAR CONFERENCE. LOS ANGELES, MAR. 12 - 13, 1991, NEW YORK, IEEE, US, vol. CONF. 5, 12 mars 1991 (1991-03-12), pages 6-10, XP010038682 ISBN: 0-87942-629-2**

**EP 1 336 867 B1**

**Description**

La présente invention concerne les techniques de régulation de la charge d'un radar. Elle s'applique notamment à la régulation de la charge d'un radar multifonction à balayage électronique.

Les radars multifonction à balayage électronique peuvent dépointer leurs faisceaux de façon instantanée dans un cône d'axe perpendiculaire au plan de l'antenne. Ils possèdent différents modes de fonctionnement : antenne tournante, antenne arrêtée, mode mixte, antenne multi-dales,.... Les radars multifonction effectuent plusieurs types de pointages correspondant à différentes missions opérationnelles : la détection (pointages de veille), le pistage de cibles (pointages de poursuite), l'identification, le guidage de missile...

Un radar comprend généralement un générateur de requêtes, qui traduit les missions en demandes de pointages. A une mission de veille correspondent des demandes de pointages permettant de mailler un espace de veille. A une mission de poursuite correspond une ou plusieurs demandes de pointages permettant de suivre une piste. Les demandes de pointages des missions de veille et des missions de poursuite sont destinées à être exécutées de manière périodique. Il existe aussi des demandes de pointages dont l'exécution est sporadique, notamment les demandes de pointages de confirmation (suite à une détection lors d'une veille) et les demandes de pointage de ré-acquisition (suite à une non détection lors d'une poursuite). Ces demandes de pointages sporadiques sont généralement prioritaires par rapport aux demandes de pointage périodiques. L'exécution des demandes de pointages, périodiques ou sporadiques, est ordonnancée par un ordonnanceur.

Dans les systèmes classiques, en cas de surcharge, les demandes de pointages les moins prioritaires sont rejetées par l'ordonnanceur. Par conséquent, elles ne sont pas exécutées par le radar. Les missions de veille en particulier deviennent rapidement non-opérationnelles en cas de surcharge. Ainsi, les missions de veille étant moins prioritaires, elles ne sont exécutées que partiellement car les pointages sont répartis de façon non uniforme. En ce qui concerne les missions de poursuite, ces radars sont spécifiés pour poursuivre un nombre maximum de cibles. Au-delà de ce nombre, la poursuite ne peut plus être exécutée de façon opérationnelle. Pourtant, l'exécution de ces missions pourrait dans certains cas être possible, de manière moins performante mais en demeurant opérationnelle.

Le texte du brevet US 4,649,390 délivré le 10 mars 1987 à la société Hugues Aircraft, decrit un système radar mettant en oeuvre au cours du balayage de l'espace surveillé, deux modes de fonctionnements, un mode de fonctionnement courant selon lequel, le radar caractérise les objets détectés au moyen de paramètres à deux dimensions (azimut et distance) et un mode spécifique déclenché sur décision du système selon lequel pour certains objets présentant un intérêt particulier, le radar caractérise les objets détectés au moyen de paramètres à trois dimensions (azimut, distance et élévation). Selon ce document le choix du mode de fonctionnement adopté pour un azimut donnée est ici déterminé a priori, et ne fait pas l'objet d'un choix dynamique.

Le texte du brevet US 5,748,468 délivré le 10 mars 1987 à la société Microsoft, décrit un système et un procédé associé permettant d'optimiser l'utilisation de ressources de traitement de données pour réaliser un ensemble de tâches répertoriées devant être réalisées à un instant donné. Le procédé attribue à chaque tâche un niveau de priorité et gère de manière dynamique en fonction de l'apparition de tâches nouvelles le niveau de priorité des tâches déjà répertoriées. Cet ordonnancement dynamique est réalisé en tenant compte des ressources disponibles. Le procédé décrit ici ne réalise cependant qu'un simple ordonnancement temporel des tâches à exécuter, celles-ci étant exécutées à la suite les une des autres en fonction de leur ordre de priorité.

Le texte de la demande de brevet FR 8417933 déposée le 23 novembre 1984 par la société Dassault Electronique et publiée le 2 février 1996 sous la référence FR-A-2 723 211, décrit quant à lui un dispositif radar équipé d'une antenne à balayage électronique comportant des moyens permettant l'entrelacement temporel rapide de formes d'ondes différentes cet entrelacement permettant quant à lui d'optimiser l'utilisation du temps correspondant à la durée maximale de chaque récurrence radar. Selon ce document, ce temps est ainsi utilisé pour effectuer des tâches distinctes dans des directions différentes. Le document ne précise cependant pas si un choix doit être effectué en temps réel pour déterminer les tâches à exécuter et si oui comment ce choix peut être effectué.

Par ailleurs le document de Kim K. Pham intitulé "Location accuracy in X-band multifunction radar", publié dans les pages 6 à 10 de la revue référencée IEEE, US, VOL. CONF. 5 du 12 mars 1991, présente un radar comportant une antenne tournante à réseaux et des moyens permettant de réaliser un balayage électronique 3D à l'aide de cette antenne, ledit radar étant capable de réaliser des tâches radar diverses telle que des pointages de veille, de confirmation et de poursuite, ainsi que des tâches de télécommande de missiles. Le document ne décrit cependant pas comment les capacités de l'antenne sont mises en oeuvre au cours du temps pour effectuer les différents pointages.

Par distinction avec cet état de la technique, selon l'invention on régule la charge en amont du générateur de requêtes. Pour réguler la charge, on alloue a priori, et indépendamment de la charge réelle totale du radar, un temps maximum disponible pour exécuter un ensemble de missions (poursuites, veilles) déterminé. On agit ensuite sur des paramètres de contrôle. Ces paramètres de contrôle permettent d'agir sur les performances de missions de manière homogène pour adapter dans la mesure du possible le temps nécessaire à l'exécution de ces missions au temps maximum disponible.

Par ses caractéristiques, telles qu'elles seront décrites et revendiquées ci-après, l'invention vise à réguler la charge d'un radar pour permettre d'exécuter de manière opérationnelle tant que cela est possible un ensemble de missions déterminé.

Pour satisfaire à cet objectif et obtenir d'autres avantages qui ressortiront plus loin, l'invention a pour objet un procédé de régulation de charge d'un radar, caractérisé en ce qu'étant donné un ensemble de missions déterminé :

- on détermine la valeur d'un premier paramètre de contrôle, ce premier paramètre de contrôle étant la charge allouée à l'exécution desdites missions ;
- on détermine des valeurs de seconds paramètres de contrôle, ces seconds paramètres de contrôle permettant de modifier le nombre et/ou les caractéristiques des demandes de pointages nécessaires à l'exécution desdites missions, pour que l'ensemble desdites missions puissent être exécuté de manière opérationnelle, et si cela est possible que la charge nécessaire à l'exécution de l'ensemble desdites missions soit inférieure ou égale à la valeur du premier paramètre de contrôle. Selon un mode de réalisation avantageux, les missions correspondent à des demandes de pointages périodiques.

Selon un mode de réalisation avantageux, les missions correspondent à des demandes de pointages périodiques.

Selon un mode de réalisation avantageux, les seconds paramètres de contrôle comprennent la période de rafraîchissement des demandes de pointages.

Selon un mode de réalisation avantageux:

- on divise l'espace couvert par le radar en secteurs fixes $S_k$ ($S_1$, $S_2$, ..., $S_8$), l'indice k allant de 1 à $N_S$;
- dans chaque secteur fixe, on détermine une valeur du premier paramètre de contrôle.

Selon un mode de réalisation avantageux, les secteurs fixes $S_k$ sont des secteurs azimutaux.

Selon un mode de réalisation avantageux, les secteurs fixes $S_k$ ont la même dimension.

Selon un mode de réalisation avantageux, on modifie la valeur des seconds paramètres de contrôle plus souvent que celle du premier paramètre de contrôle.

Selon un mode de réalisation avantageux, les missions sont des missions de veille.

Selon un mode de réalisation avantageux, les seconds paramètres de contrôle permettent de modifier le maillage de chaque mission de veille.

Selon un mode de réalisation avantageux, les seconds paramètres de contrôle permettant de modifier le maillage de chaque mission de veille comprennent les facteurs de recouvrement.

Selon un mode de réalisation avantageux, les missions sont des missions de poursuite.

Selon un mode de réalisation avantageux, les seconds paramètres de contrôle sont les périodes de rafraîchissement des pistes les moins prioritaires.

Selon un mode de réalisation avantageux, on détermine une limite maximale à la période de rafraîchissement des pistes.

L'invention a pour principaux avantages, qu'elle est simple à mettre en oeuvre, qu'elle est économique, et qu'elle permet :

- lorsqu'elle est appliquée aux missions de veille, d'adapter le maillage de veille, en conservant une veille opérationnelle ;
- lorsqu'elle est appliquée aux missions de poursuite, d'adapter la période de rafraîchissement de certaines pistes, en conservant des poursuites opérationnelles.

L'invention sera maintenant décrite de manière plus détaillée dans le cadre d'un exemple particulier de réalisation pratique. Dans le cours de cette description, on fera référence aux figures des dessins annexés, parmi lesquelles :

- les figures 1 et 2, des schémas synoptiques, représentent un exemple d'espaces veillés par trois missions de veille ;
- la figure 3, un schéma synoptique, représente la division de l'espace couvert par le radar en secteurs azimutaux fixes ;
- la figure 4, un schéma synoptique, représente un exemple de maillage de veille ;
- la figure 5, un schéma synoptique, représente un détail du maillage de veille représenté sur la figure 4 ;
- la figure 6, un schéma synoptique, représente la variation du facteur de recouvrement sur le détail représenté sur la figure 5 ;
- la figure 7, un schéma synoptique, représente un exemple de période de rafraîchissement d'un maillage de veille.

Le radar pris en exemple peut être un radar à balayage électronique à antenne tournante. Il peut couvrir par exemple un espace sur 360° en azimut. Bien entendu, l'invention s'applique à tout type de radar. Elle s'applique aussi aux radars à antenne fixe.

Le radar comprend un centre de commande et de contrôle. Ce centre de commande et de contrôle définit des missions, telles que des missions de veille ou de poursuite. Ces missions sont destinées à être exécutées par le radar. Chaque mission est définie au moins par :

- une portée,
- une probabilité de détection pour une surface équivalente radar (SER) donnée. On utilise une probabilité de détection typique de 0,9.

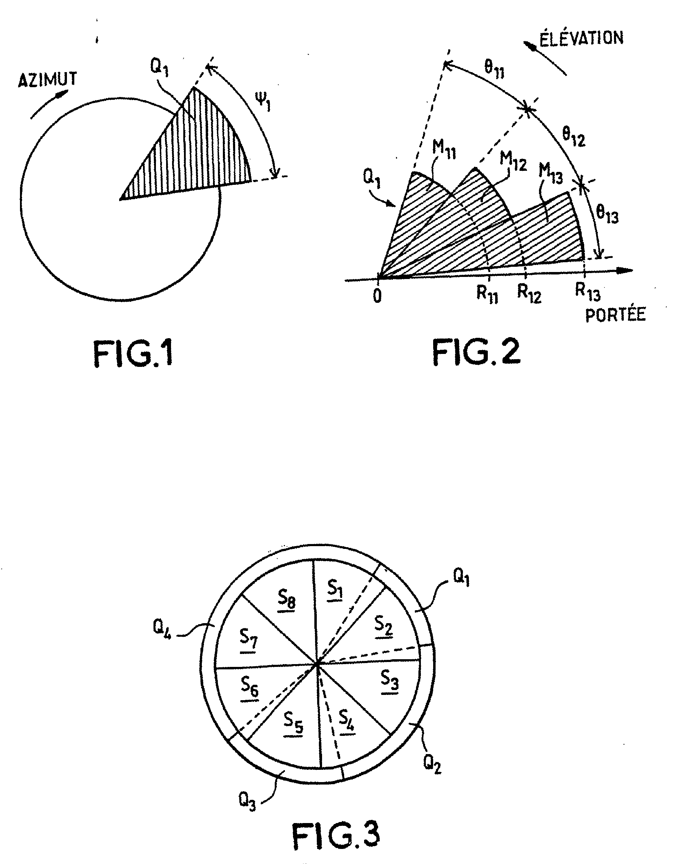

On se réfère maintenant aux figures 1 et 2. La figure 1 représente un secteur azimutal $Q_1$ dans lequel le radar exécute des missions de veille. Le secteur azimutal $Q_1$ s'étend en azimut sur un angle $\psi_1$. On divise ce secteur azimutal en élévation, comme représenté sur la figure 2. Ainsi, le secteur azimutal $Q_1$ est divisé par exemple en trois sous-secteurs. Ces sous-secteurs sont des secteurs de veille. Chaque secteur de veille est couvert par une mission de veille $M_{11}$, $M_{12}$, $M_{13}$. On définit des volumes de veille en délimitant ces secteurs de veille en portée. Les volumes de veille sont donc délimités par des bornes en azimut, en élévation et en portée. Les volumes de veille sont le produit d'un angle solide (limites en azimut et en élévation) par une portée. La mission de veille $M_{11}$ s'étend en élévation sur un angle $\theta_{11}$ et correspond à une portée $R_{11}$. De même, les missions de veille $M_{12}$ et $M_{13}$ s'étendent respectivement en élévation sur des angles $\theta_{12}$ et $\theta_{13}$, et correspondent respectivement à des portées $R_{12}$ et $R_{13}$.

On se réfère maintenant à la figure 3. L'espace couvert par le radar est représenté par un diagramme azimutal, l'antenne du radar étant au centre de ce diagramme. Le centre de commande et de contrôle définit par exemple des missions de veille permettent de veiller sur tout l'espace couvert par le radar. Les missions de veille peuvent par exemple partager l'espace couvert par le radar en secteurs azimutaux $Q_1$, $Q_2$, $Q_3$, $Q_4$.

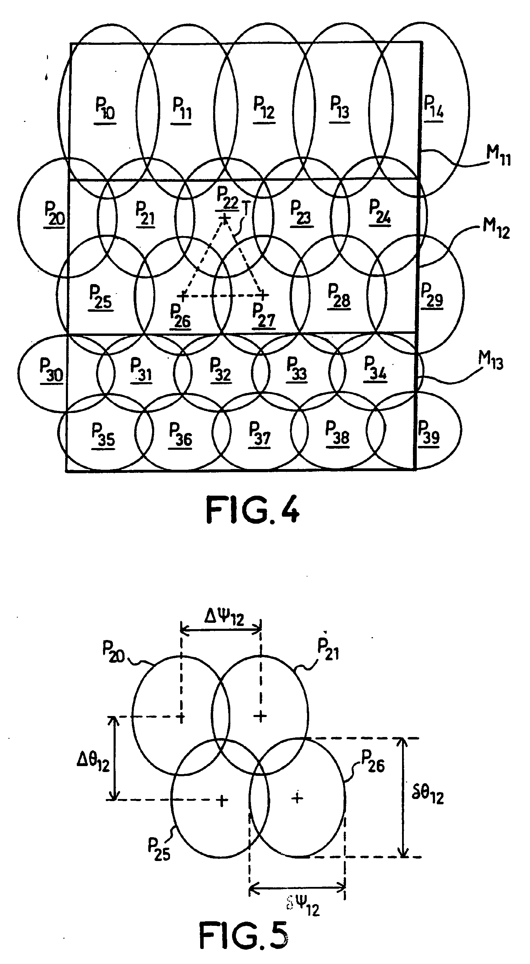

On se réfère à la figure 4. Chaque mission de veille correspond donc à un secteur de veille, c'est à dire un angle solide couvert par la mission de veille. Les secteurs de veille sont maillés. En d'autres termes, chaque secteur de veille comprend des demandes de pointages formant un maillage dudit secteur. Ainsi, le secteur de veille de la mission $M_1$ est maillé par des demandes de pointages $P_{10}$ à $P_{14}$. De même, le secteur de veille de la mission $M_2$ est maillé par des demandes de pointage $P_{20}$ à $P_{29}$. Le secteur de veille de la mission $M_3$ est maillé par des demandes de pointage $P_{30}$ à $P_{39}$.

Ces maillages peuvent être des maillages triangulaires par exemple, c'est à dire des maillages dans lesquels les demandes de pointages sont réparties en quinconce. Les centres de ces demandes de pointage forment des triangles. Ainsi, les centres des demandes de pointages $P_{22}$, $P_{26}$, $P_{27}$ forment un triangle T.

On se réfère maintenant à la figure 5. Dans un maillage (c'est à dire pour une mission de veille), les centres des demandes de pointage peuvent être régulièrement espacés en azimut et en élévation. L'écart en azimut entre deux demandes de pointage est noté $\Delta\psi_k$. L'écart en élévation entre deux demandes de pointage est noté $\Delta\theta_k$. On a représenté ces écarts pour la mission de veille $M_{12}$, c'est à dire pour k égal à 12.

Chaque demande de pointage du maillage couvre un angle solide sensiblement identique. L'étendue en azimut d'une demande de pointage est notée $\delta\psi_k$. L'étendue en élévation d'une demande de pointage est notée $\delta\theta_k$. Par soucis de clarté, on suppose dans la suite de la description que les étendues en élévation (respectivement les étendues en azimut) des demandes de pointage d'un même maillage sont identiques. On peut adapter les explications suivantes en effectuant une transformation sur les angles (en sinus par exemple) pour corriger les distorsions résultant de cette approximation.

Grâce à la mise en oeuvre du procédé selon l'invention, on peut réguler la charge en déterminant le nombre et les caractéristiques des demandes de pointage d'un ensemble de missions déterminé. A cet effet, on utilise un premier paramètre de contrôle. Ce premier paramètre de contrôle est la charge allouée à l'exécution d'un ensemble de missions déterminé. Pour mémoire, une charge est le rapport entre un temps d'exécution (théorique, maximum, réel,...) et le temps total disponible. On l'exprime en général en pourcentage. La charge totale du radar, c'est à dire la charge correspondant à l'exécution de toutes les demandes de pointages, comprend notamment une charge de poursuite et une charge de veille.

Par exemple, l'ensemble de missions déterminé peut être formé par les missions de veille du radar. En d'autres termes, dans cet exemple, le premier paramètre de contrôle est la charge allouée aux missions de veille. On peut estimer la charge disponible pour la veille ou réserver une charge minimale. Pour estimer la charge disponible pour la veille, on estime d'abord les autres charges, puis on en détermine la charge pour la veille qui amène la charge totale du radar à 100%. Sinon, on peut réserver une charge minimale si on souhaite ne pas descendre au-dessous d'un seuil déterminé, par exemple 25%.

On cherche ensuite à adapter le nombre et/ou les caractéristiques des demandes de pointages nécessaires à l'exécution desdites missions à la charge allouée (estimée ou réservée). A cet effet, on utilise des seconds paramètres de contrôle. Ces seconds paramètres de contrôle permettent de modifier le nombre et/ou les caractéristiques des demandes de pointages nécessaires à l'exécution desdites missions. Ces paramètres de contrôle peuvent être par exemple la période de rafraîchissement des demandes de pointage, et le facteur de recouvrement des demandes de pointage.

On détermine des valeurs de seconds paramètres de contrôle, pour que l'ensemble desdites missions puissent être exécuté de manière opérationnelle, et si cela est possible que la charge nécessaire à l'exécution de l'ensemble desdites missions soit inférieure ou égale à la valeur du premier paramètre de contrôle. Une mission s'exécute de manière opérationnelle si les performances demandées, c'est à dire les caractéristiques de cette mission (portée, probabilité de détection, ...), sont atteintes ou dépassées. Pour s'assurer que les missions restent opérationnelles, on borne les valeurs des paramètres de contrôles dans des plages de valeurs. En d'autres termes, on fait varier les valeurs des seconds paramètres de contrôles en cherchant à rendre la charge nécessaire à l'exécution de l'ensemble desdites missions inférieure ou égale à la valeur du premier paramètre de contrôle, les valeurs des seconds paramètres de contrôle étant bornées pour que l'ensemble desdites missions puissent être exécuté de manière opérationnelle.

Les performances demandées sont des contraintes que doivent respecter les demandes de pointage de cette mission. Le premier paramètre de contrôle est une contrainte que doivent respecter, dans la mesure du possible, les demandes de pointages correspondant à l'ensemble des missions. Le premier paramètre de contrôle est donc :

- une contrainte moins forte que les performances demandées, dans la mesure où la contrainte sur la charge (premier paramètre de contrôle) ne doit pas nécessairement être respectée ;
- et c'est aussi une contrainte plus globale, dans la mesure où elle s'applique à un plus grand nombre de demandes de pointage.

On est amené, pour déterminer la valeur des seconds paramètres de contrôle, à effectuer une optimisation sous contrainte. Ceci est possible en utilisant des techniques directes ou indirectes. Les techniques directes consistent à exprimer les seconds paramètres de contrôle comme une fonction du premier paramètre de contrôle. Les techniques directes sont les plus simples, mais elles ne peuvent pas toujours être mises en oeuvre. Les techniques indirectes consistent à déterminer des valeurs initiales des seconds paramètres de contrôle, puis à modifier ces valeurs initiales de manière itérative.

Ainsi, lorsque le radar est surchargé, plutôt que de faire une veille non opérationnelle à 400km par exemple, on fait une veille opérationnelle à 300km en élargissant les faisceaux par exemple (seconds paramètres de contrôle).

Selon un mode de réalisation pratique, on peut déterminer le nombre et les caractéristiques de demandes de pointage des missions de veille en deux étapes :

- lors d'une première étape, pour chaque mission de veille, on détermine les caractéristiques des demandes de pointage en choisissant une forme d'onde et une géométrie de faisceau ;
- lors d'une seconde étape, on détermine le maillage des missions de veille.

On décrit maintenant un exemple de procédé destiné à être mis en oeuvre lors de la première étape. Ce procédé permet de choisir une forme d'onde et une géométrie de faisceau, de manière à respecter les performances demandées (caractéristiques des missions). Ce choix repose sur l'optimisation du temps nécessaire à l'exécution d'une mission de veille. Ce temps peut s'estimer avec la relation suivante :

$$T_{VEILLE} = \Omega_{VEILLE} \times \frac{TP}{\Omega_{EFF}} \qquad (1)$$

où:

$T_{VEILLE}$ est le temps nécessaire à l'exécution de la mission de veille ;
$\Omega_{VEILLE}$ est l'angle solide couvert par la mission de veille ;
TP est le temps nécessaire à l'exécution d'une demande de pointage ;
$\Omega_{EFF}$ est l'angle solide effectif couvert par une demande de pointage.

L'angle solide couvert par la mission de veille est fixe : c'est l'une des caractéristiques de la mission. Pour minimiser le temps nécessaire à l'exécution de la mission de veille, on cherche donc à minimiser le rapport entre temps nécessaire à l'exécution d'une demande de pointage sur l'angle solide effectif couvert par une demande de pointage :

$$\frac{TP}{\Omega_{EFF}} \qquad (2)$$

Le temps TP nécessaire à l'exécution d'une demande de pointage est égal à la durée de la forme d'onde choisie. L'angle solide effectif $\Omega_{EFF}$ couvert par une demande de pointage est proportionnel à l'angle solide réel couvert par ladite demande de pointage. Ces deux angles solides sont généralement différents. L'angle solide effectif dépend de l'espacement entre les demandes de pointages ($\Delta\theta_k$ et $\Delta\psi_k$). Plus $\Delta\theta_k$ et/ou $\Delta\psi_k$ diminuent (les demandes de pointages se rapprochent), plus l'angle solide effectif diminue. L'angle solide réel couvert par une demande de pointage est égal à l'angle solide du faisceau. L'angle solide du faisceau est fonction de la géométrie du faisceau.

Etant donné un ensemble de formes d'ondes pouvant être exécutées par le radar, et un ensemble de géométries de faisceaux pouvant être exécutées par le radar, on considère les couples de forme d'onde, géométrie de faisceau permettant d'assurer une probabilité de détection suffisante (la probabilité de détection minimale est une caractéristique de la mission). Parmi ces couples, on choisit celui qui permet de minimiser le rapport « durée de la forme d'onde / angle solide du faisceau ». On peut supposer ici que l'angle solide du faisceau est égal au produit de son étendue en azimut et de son étendue en élévation.

On décrit maintenant un exemple de procédé destiné à être mis en oeuvre lors de la seconde étape. Ce procédé permet de déterminer un maillage des missions de veille.

Avantageusement, comme illustré sur la figure 3, on divise l'espace couvert par le radar en secteurs fixes $S_k$, l'indice k allant de 1 à $N_S$. Ces secteurs fixes $S_1$, $S_2$, ..., $S_8$ peuvent être au nombre de huit par exemple. Avantageusement, ces secteurs fixe sont des secteurs azimutaux, ce qui simplifie la mise en oeuvre du procédé selon l'invention. Avantageusement, les secteurs fixes peuvent avoir la même dimension. Chaque mission de veille $M_k$ peut couvrir entièrement ou partiellement un ou plusieurs secteurs fixes. Les secteurs de veille peuvent varier souvent tandis que les secteurs fixes restent les mêmes. En effet, il n'est pas possible en temps réel de faire une division adaptative de l'espace en fonction de l'homogénéité de la charge. En outre, la charge de pistage est éparse.

Dans chaque secteur fixe, on détermine une valeur du premier paramètre de contrôle. On peut déterminer des valeurs différentes dans chaque secteur fixe. On note ces valeurs $US_1$, $US_2$, ..., $US_8$.

On effectue une transformation de ces premiers paramètres de contrôle pour partager l'espace couvert avec les secteurs azimutaux $Q_k$ au lieu des secteurs fixes $S_k$. Ceci permet de simplifier la mise en oeuvre du procédé. En d'autres termes, on détermine la charge allouée dans chaque secteur azimutal $Q_1$, $Q_2$, $Q_3$, $Q_4$. A cet effet, on effectue une moyenne pondérée des charges allouées par secteur fixe. Ainsi, la charge $UQ_k$ allouée dans le secteur azimutal $Q_k$ est égale à la moyenne pondérée des charges $US_1$, $US_2$, ..., $US_8$. On pondère ces charges par l'intersection entre le secteur azimutal $Q_k$ et les secteurs fixes $S_1$, $S_2$, ..., $S_8$. Ces intersections peuvent s'exprimer en unité d'angle solide par exemple. En utilisant des secteurs fixes azimutaux, l'intersection peut s'exprimer plus simplement en produit d'unité d'angle azimutal et d'unité d'angle d'élévation. La moyenne pondérée peut s'écrire de la manière suivante :

$$UQ_k = \frac{1}{\sum_{i=1}^{N_S} INT(Q_k ; S_i)} \sum_{i=1}^{N_S} INT(Q_k ; S_i) \times US_i \qquad (3)$$

où $INT(Q_k ; S_i)$ représente l'intersection entre le secteur azimutal $Q_k$ et le secteur fixe $S_i$.

On détermine ensuite le temps alloué $TA_k$ dans chaque secteur azimutal $Q_k$ à partir du temps total disponible. Pour un radar à antenne tournante (en azimut), ce temps alloué peut s'écrire de la manière suivante :

$$TA_k = UQ_k \times \frac{\Psi_k}{\omega} \qquad (4)$$

où $\psi_k$ est l'étendue azimutale du secteur de veille, et $\omega$ est la vitesse de rotation de l'antenne.

On détermine ensuite les valeurs des seconds paramètres de contrôle dans chaque secteur azimutal $Q_K$. Ces paramètres de contrôle peuvent être le facteur de recouvrement des demandes de pointage du maillage, noté $F_k$, et la période de rafraîchissement des demandes de pointage, notée $NR_k$. Avantageusement, on utilise les même valeurs de ces seconds paramètres pour toutes les missions $M_i$ d'un même secteur azimutal $Q_k$.

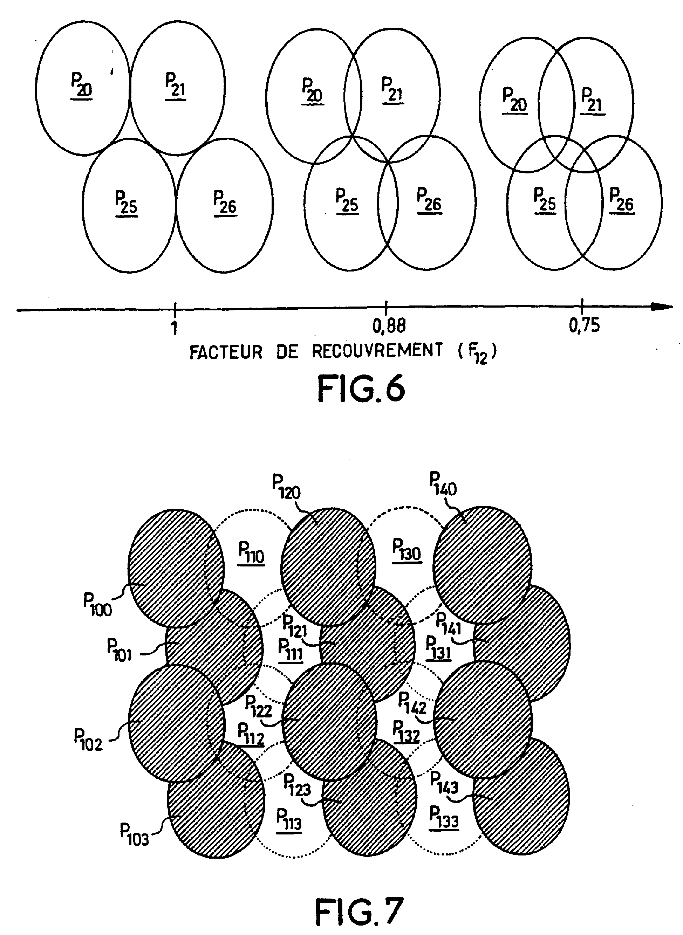

On se réfère maintenant aux figures 5 et 6. Le facteur de recouvrement, est un facteur d'échelle de l'espacement entre les demandes de pointage. On l'exprime par rapport à la largeur desdites demandes de pointages. Pour un maillage triangulaire (correspondant à une mission $M_k$), il lie l'espacement entre les demandes de pointages et les dimensions de faisceau de la manière suivante :

$$\Delta\theta_k = F_k \times \delta\theta_k \qquad (5)$$

$$\Delta\Psi_k = \frac{\sqrt{3}}{2} \times F_k \times \delta\Psi_k \qquad (6)$$

Comme illustré sur la figure 6, lorsque ce facteur est supérieur à 1, les faisceaux ne se croisent pas. Il y a donc des trous dans la veille. Plus ce facteur diminue, plus les demandes de pointages se rapprochent. On diminue donc l'angle solide effectif des demandes de pointage. Par contre on assure un meilleur maillage en terme de recouvrement. Pour que la mission de veille soit opérationnelle, le facteur de recouvrement doit être inférieur à une valeur déterminée, par exemple 1.

On se réfère maintenant à la figure 7. Pour les radars à antenne tournante, la période de rafraîchissement d'une demande de pointage est égale au nombre de tour d'antenne séparant l'exécution de cette demande de pointage. Pour une période de rafraîchissement égale à par exemple 2, on peut entrelacer les demandes de pointage d'un maillage. Ainsi, lors d'un tour d'antenne, les demandes de pointages $P_{100}$ à $P_{103}$, $P_{120}$ à $P_{123}$, et $P_{140}$ à $P_{143}$ sont exécutées. Lors du tour d'antenne suivant, les demandes de pointages $P_{110}$ à $P_{113}$, et $P_{130}$ à $P_{133}$ sont exécutées. En augmentant la période de rafraîchissement, on diminue les performances de la veille, sans pour autant la rendre non opérationnelle. Ceci dépend notamment de la probabilité de migration d'une cible entre les pointages.

Le temps $TM_k$ nécessaire à l'exécution d'une mission de veille $M_k$ dans un tour d'antenne peut s'exprimer avec la relation suivante :

$$TM_k = \frac{2}{\sqrt{3}} \times \frac{1}{N_k \times F_k{}^2} \times \frac{\Psi_k \times \theta_k \times TP_k}{\delta\Psi_k \times \delta\theta_k} \qquad (7)$$

où $TP_k$ est le temps nécessaire à l'exécution d'une demande de pointage pour la mission $M_k$.

Dans un secteur azimutal $Q_k$, le temps nécessaire $TQ_k$ à l'exécution des missions de veille $M_i$ couvrant ce secteur azimutal s'exprime donc de la manière suivante :

$$TQ_k = \frac{2}{\sqrt{3}} \times \frac{1}{N_k \times F_k{}^2} \times \sum_i \frac{\Psi_i \times \theta_i \times TP_i}{\delta\Psi_i \times \delta\theta_i} \qquad (8)$$

Les valeurs des grandeurs indicées par i sont déterminées lors de la première étape. La valeur des grandeurs indicées par k, c'est à dire les seconds paramètres de contrôle, reste à définir dans cette seconde étape.

On prend une valeur initiale de $N_k$ égale à 1. Puis on résout l'équation suivante pour déterminer une valeur initiale de $F_k$ :

$$TA_k = TQ_k \qquad (9)$$

c'est à dire :

**7**

$$F_k = \sqrt{\frac{2}{\sqrt{3}} \times \frac{1}{TA_k \times N_k} \times \sum_i \frac{\psi_i \times \theta_i \times TP_i}{\delta\psi_i \times \delta\theta_i}} \qquad (10)$$

Si la valeur de $F_k$ est trop grande, par exemple supérieur à 1, les missions de veille ne sont pas opérationnelles. On augmente $N_k$ de 1 et on détermine une nouvelle valeur de $F_k$. Cette nouvelle valeur de $F_k$ sera plus petite. On recommence ainsi à augmenter $N_k$ par pas de 1 jusqu'à ce que la valeur de $F_k$ soit assez petite. Les missions de veille sont alors opérationnelles et elles occuperont la charge allouée.

Si la valeur de $F_k$ est trop petite, par exemple inférieure à 0,75, le maillage est trop resserré. Il y a donc une perte de temps. On fixe $N_k$ à 1 et $F_k$ à une valeur minimale, telle que 0,75. Les missions de veille sont alors opérationnelles et elles occuperont une charge inférieure à celle allouée.

Ainsi, on adapte la valeur du facteur de recouvrement $F_k$ en fonction du temps alloué $TA_k$. Le facteur de recouvrement possède des bornes minimale (par exemple 0,75) et maximale (par exemple 1).

Dans cet exemple de réalisation, on a déterminé la valeur du facteur de recouvrement en utilisant une technique d'optimisation sous contrainte directe. Selon une variante de mise en oeuvre du procédé, on peut utiliser une technique d'optimisation sous contrainte indirecte pour déterminer conjointement la valeur du facteur de recouvrement et de la période de rafraîchissement.

On peut utiliser un ensemble fini de valeurs de facteur de recouvrement. En d'autres termes, on peut échantillonner la valeur du facteur de recouvrement. On procède ensuite itérativement.

Si la borne minimale du facteur de recouvrement est atteinte, on fixe la valeur du facteur de recouvrement $F_k$ à cette borne minimale. Puis on adapte la valeur de la période de rafraîchissement $N_k$ en la diminuant si c'est possible.

Si la borne maximale du facteur de recouvrement est atteinte, on fixe la valeur du facteur de recouvrement à cette borne maximale. Puis on augmente la valeur de la période de rafraîchissement $N_k$ jusqu'à une certaine limite. Si cette période limite est atteinte, on arrête les itérations, et on fournit le maillage défini par le facteur de recouvrement maximum et la période de rafraîchissement maximale.

Ainsi, lors de la première étape, on optimise les maillages de veille par secteur azimutal $Q_k$. Dans un secteur azimutal, il existe plusieurs secteurs de veille répartis en élévation. Ces secteurs de veilles correspondent à des missions de veille différentes pouvant avoir des portées requises différentes. Pour chaque secteur de veille, on détermine la géométrie des faisceaux et la forme d'onde. A cet effet, on minimise le ratio « durée de la forme d'onde / surface angulaire observée » en choisissant parmi des géométries de faisceau et des formes d'ondes celles qui vérifient la contrainte sur la portée et la probabilité de détection (caractéristiques des missions). Lors de la seconde étape, on adapte les valeurs du facteur de recouvrement et de la période de rafraîchissement globalement par secteur azimutal pour tenir la contrainte liée au temps disponible l'exécution des missions de veille.

Selon l'invention, on peut aussi réguler la charge de missions de poursuite. Par secteur azimutal $S_k$ du tour d'antenne, on alloue une charge (premier paramètre de contrôle) pour l'exécution des demandes de pointages des missions de poursuite. Cette charge peut être une limite physique (100% du temps dédié à la poursuite) ou artificielle (seulement X% du temps alloué à la poursuite). On peut utiliser une limite artificielle afin de toujours garder un temps incompressible réservé aux missions moins prioritaires, telles que les missions de veille.

Puis on détermine des valeurs de seconds paramètres de contrôle, pour que l'ensemble desdites missions puissent être exécuté de manière opérationnelle, et si cela est possible que la charge nécessaire à l'exécution de l'ensemble desdites missions soit inférieure ou égale à la valeur du premier paramètre de contrôle.

Ces seconds paramètres de contrôle peuvent être la période de rafraîchissement des demandes de pointage. On peut déterminer leur valeur en utilisant une méthode indirecte. On assigne une période de rafraîchissement initiale à chaque demande de pointage de poursuite. La valeur de cette période initiale peut dépendre de la cinématique de la cible, des caractéristiques géométriques de la demande de pointage, et des performances de l'algorithme de pistage.

Puis on évalue la charge nécessaire à l'exécution des demandes de pointages des missions de poursuite (temps nécessaire à la poursuite). Plus précisément, on détermine pour chaque secteur $S_k$ le temps nécessaire pour l'exécution de l'ensemble de ces demandes de pointage des missions de poursuite. Si cette charge nécessaire dépasse la charge allouée, on augmente les périodes de rafraîchissement (second paramètre de contrôle) des demandes de pointage des poursuites les moins prioritaires.

On peut commencer par augmenter la période de rafraîchissement des demandes de pointage les moins prioritaires. On augmente itérativement par pas de 1 cette période de rafraîchissement jusqu'à ce que :

- on atteigne une limite liée aux hypothèses sur les vitesses maximum des cibles (mission de poursuite non opérationnelle) ; ou,
- le temps nécessaire à la poursuite soit inférieur ou égal au temps alloué.

Si toutes les demandes de pointage de la priorité considéré ont atteint leur limite, on peut passer aux demandes de pointage de priorité immédiatement supérieure.

En d'autres termes, on réduit dans la mesure du possible la charge nécessaire à l'exécution des missions de poursuite, jusqu'à ce que cette charge soit inférieure ou égale à celle allouée.

L'invention permet de gérer la charge radar en amont au niveau du générateur de requêtes, et de ne plus subir la surcharge en aval de la chaîne au niveau de l'ordonnanceur.

L'invention s'applique bien entendu à la régulation de charge pour tout type de mission. Avantageusement, ces missions correspondent à des demandes de pointages périodiques. Les demandes de pointage périodique sont des demandes de pointage non urgents. On possède ainsi des degrés de libertés qui permettent d'agir globalement sur les caractéristiques d'un ensemble de demandes de pointage. On peut donc agir plus facilement sur les seconds paramètres de contrôle.

## Revendications

1. Procédé de régulation de charge d'un radar, ledit radar étant configuré pour remplir un ensemble de missions déterminé ($M_{11}$, $M_{12}$, $M_{13}$), chaque mission étant **caractérisée par** un ensemble de caractéristiques que la mission doit présenter, la charge du radar étant définie par le rapport entre le temps disponible et le temps nécessaire pour exécuter les différentes missions, **caractérisé en ce qu'**il comporte :

   - une première étape durant laquelle on détermine la valeur d'un premier paramètre de contrôle, ce premier paramètre de contrôle étant la charge allouée à l'exécution desdites missions ;
   - une seconde étape durant laquelle on détermine des valeurs de seconds paramètres de contrôle ($F_{12}$), ces seconds paramètres de contrôle permettant de modifier le nombre et/ou les caractéristiques des demandes de pointages ($P_{20}$, $P_{21}$, $P_{25}$, $P_{26}$) nécessaires à l'exécution desdites missions, pour que l'ensemble desdites missions puissent être exécuté de manière opérationnelle, une mission étant exécutée de manière opérationelle quand les caractéristiques de cette mission sont atteintes ou dépassées, et si cela est possible que la charge nécessaire à l'exécution de l'ensemble desdites missions soit inférieure ou égale à la valeur du premier paramètre de contrôle.

2. Procédé de régulation selon la revendication 1, **caractérisé en ce que** les missions correspondent à des demandes de pointages périodiques.

3. Procédé de régulation selon la revendication 2, **caractérisé en ce que** les seconds paramètres de contrôle comprennent la période de rafraîchissement des demandes de pointages.

4. Procédé de régulation selon l'une quelconque des revendications précédentes, **caractérisé en ce que** :

   - on divise l'espace couvert par le radar en secteurs fixes $S_k$ ($S_1$, $S_2$, ..., $S_8$), l'indice k allant de 1 à $N_S$,
   - dans chaque secteur fixe, on détermine une valeur du premier paramètre de contrôle.

5. Procédé de régulation selon la revendication précédente, **caractérisé en ce que** les secteurs fixes $S_k$ sont des secteurs azimutaux.

6. Procédé de régulation selon l'une quelconque des revendications 4 à 5, **caractérisé en ce que** les secteurs fixes $S_k$ ont la même dimension.

7. Procédé de régulation selon l'une quelconque des revendications précédentes, **caractérisé en ce qu'**on modifie la valeur des seconds paramètres de contrôle plus souvent que celle du premier paramètre de contrôle.

8. Procédé de régulation selon l'une quelconque des revendications précédentes, **caractérisé en ce que** les missions sont des missions de veille.

9. Procédé de régulation selon la revendication 8, **caractérisé en ce que** les seconds paramètres de contrôle permettent de modifier le maillage de chaque mission de veille.

10. Procédé de régulation selon la revendication 9, **caractérisé en ce que** les seconds paramètres de contrôle permettant de modifier le maillage de chaque mission de veille comprennent les facteurs de recouvrement.

**11.** Procédé de régulation selon l'une quelconque des revendications 1 à 7, **caractérisé en ce que** les missions sont des missions de poursuite.

**12.** Procédé de régulation selon la revendication 11, **caractérisé en ce que** les seconds paramètres de contrôle sont les périodes de rafraîchissement des pistes les moins prioritaires.

**13.** Procédé de régulation selon la revendication 12, **caractérisé en ce qu'**on détermine à priori une limite maximale à la période de rafraîchissement des pistes.

**Claims**

**1.** A process for regulating the workload of a radar, said radar being configured to carry out a set of predetermined missions ($M_{11}$, $M_{12}$, $M_{13}$), each mission being **characterised by** a set of characteristics which must be brought about by the mission, the radar workload being defined by the relationship between the time available and the time required to complete the different missions, **characterised in that** it includes:

- a first step, wherein the value of a first control parameter is determined, said first control parameter being the workload assigned for completion of said missions;
- a second step, wherein the values of second control parameters ($F_{12}$) are determined, these second control parameters allowing modification of the number and/or the characteristics of the plotting requests ($P_{20}$, $P_{21}$, $P_{25}$, $P_{26}$) required for completion of said missions, so that all of said missions may be performed in an operational manner, a mission being completed in an operational manner when the characteristics of this mission are achieved or exceeded, and, if it is possible, so that the workload required for completion of the set of said missions is below or equal to the value of the first control parameter.

**2.** The process for regulating according to claim 1, **characterised in that** the missions correspond to periodic plotting requests.

**3.** The process for regulating according to claim 2, **characterised in that** the second control parameters include the period for refreshing the plotting requests.

**4.** The process for regulating according to any one of the previous claims, **characterised in that**:

- the space covered by the radar is divided into fixed sectors $S_k$ ($S_1$, $S_2$, ..., $S_8$), with the k index ranging from 1 to Ns,
- in each fixed sector, a value of the first control parameter is determined.

**5.** The process for regulating according to the previous claim, **characterised in that** the fixed sectors $S_k$ are azimuth sectors.

**6.** The process for regulating according to any one of claims 4 to 5, **characterised in that** the fixed sectors $S_k$ are of the same size.

**7.** The process for regulating according to any one of the previous claims, **characterised in that** the values of the second control parameters are modified more often than those of the first control parameter.

**8.** The process for regulating according to any one of the previous claims, **characterised in that** the missions are surveillance missions.

**9.** The process for regulating according to claim 8, **characterised in that** the second control parameters allow modification of the grid of each surveillance mission.

**10.** The process for regulating according to claim 9, **characterised in that** the second control parameters allow modification of the grid of each surveillance mission including the overlap factors.

**11.** The process for regulating according to any one of claims 1 to 7, **characterised in that** the missions are tracking missions.

12. The process for regulating according to claim 11, **characterised in that** the second control parameters are periods for refreshing the lowest priority paths.

13. The process for regulating according to claim 12, **characterised in that** the maximum limit for the period for refreshing the paths is determined principle.

**Patentansprüche**

1. Verfahren zum Regulieren der Arbeitslast eines Radars, das zum Ausführen eines Satzes von vorbestimmten Missionen ($M_{11}$, $M_{12}$, $M_{13}$) konfiguriert ist, wobei jede Mission durch einen Satz von Charakteristiken charakterisiert ist, die die Mission aufweisen muss, wobei die Arbeitslast des Radars anhand der Beziehung zwischen der verfügbaren Zeit und der zum Ausführen der verschiedenen Missionen benötigten Zeit definiert wird, **dadurch gekennzeichnet, dass** es Folgendes beinhaltet:

   - einen ersten Schritt, bei dem der Wert eines ersten Regelparameters ermittelt wird, wobei der erste Regelparameter die dem Ausführen der Missionen zugeordnete Arbeitslast ist;
   - einen zweiten Schritt, bei dem die Werte von zweiten Regelparametern ($F_{12}$) ermittelt werden, wobei diese zweiten Regelparameter eine Änderung der Zahl und/oder der Charakteristiken der zum Ausführen der Missionen benötigten Zielanforderungen ($P_{20}$, $P_{21}$, $P_{25}$, $P_{26}$) sind, so dass alle Missionen auf betriebliche Weise ausgeführt werden können, wobei eine Mission dann auf betriebliche Weise ausgeführt wird, wenn die Charakteristiken dieser Mission erreicht oder übertroffen sind und wenn es möglich ist, dass die zum Ausführen des Satzes von Missionen benötigte Arbeitslast gleich oder kleiner als der Wert des ersten Regelparameters ist.

2. Verfahren zum Regulieren nach Anspruch 1, **dadurch gekennzeichnet, dass** die Missionen periodischen Zielanforderungen entsprechen.

3. Verfahren zum Regulieren nach Anspruch 2, **dadurch gekennzeichnet, dass** die zweiten Regelparameter die Periode zum Auffrischen der Zielanforderungen beinhalten.

4. Verfahren zum Regulieren nach einem der vorherigen Ansprüche, **dadurch gekennzeichnet, dass**:

   - der vom Radar abgedeckte Raum in feste Sektoren $S_k$ ($S_1$, $S_2$, ..., $S_8$) unterteilt wird, wobei der k-Index von 1 bis Ns reicht,
   - in jedem festen Sektor ein Wert des ersten Regelparameters ermittelt wird.

5. Verfahren zum Regulieren nach einem der vorherigen Ansprüche, **dadurch gekennzeichnet, dass** die festen Sektoren $S_k$ Azimutsektoren sind.

6. Verfahren zum Regulieren nach Anspruch 4 oder 5, **dadurch gekennzeichnet, dass** die festen Sektoren $S_k$ dieselbe Größe haben.

7. Verfahren zum Regulieren nach einem der vorherigen Ansprüche, **dadurch gekennzeichnet, dass** der Wert der zweiten Regelparameter häufiger geändert wird als der des ersten Regelparameters.

8. Verfahren zum Regulieren nach einem der vorherigen Ansprüche, **dadurch gekennzeichnet, dass** die Missionen Überwachungsmissionen sind.

9. Verfahren zum Regulieren nach Anspruch 8, **dadurch gekennzeichnet, dass** die zweiten Regelparameter eine Änderung des Gitternetzes jeder Überwachungsmission zulassen.

10. Verfahren zum Regulieren nach Anspruch 9, **dadurch gekennzeichnet, dass** die zweiten Regelparameter, die eine Änderung des Gitternetzes jeder Überwachungsmission zulassen, die Überlappungsfaktoren umfassen.

11. Verfahren zum Regulieren nach einem der Ansprüche 1 bis 7, **dadurch gekennzeichnet, dass** die Missionen Verfolgungsmissionen sind.

12. Verfahren zum Regulieren nach Anspruch 11, **dadurch gekennzeichnet, dass** die zweiten Regelparameter die Auffrischungsperioden von den Zielverfolgungen mit der geringsten Priorität sind.

**13.** Verfahren zum Regulieren nach Anspruch 12, **dadurch gekennzeichnet, dass** vorab eine Höchstgrenze für die Auffrischungsperiode von den Zielverfolgungen ermittelt wird.

FIG.1

FIG.2

FIG.3

FIG.4

FIG.5

FACTEUR DE RECOUVREMENT ( $F_{12}$ )

FIG.6

FIG.7

## RÉFÉRENCES CITÉES DANS LA DESCRIPTION

**Documents brevets cités dans la description**

- US 4649390 A
- US 5748468 A
- FR 8417933
- FR 2723211 A

**Littérature non-brevet citée dans la description**

- **Kim K.** Location accuracy in X-band multifunction radar. *IEEE,* 12 Mars 1991, vol. 5, 6-10